# EUROPÄISCHE PATENTANMELDUNG

(11) **EP 0 920 144 A2**
(43) Veröffentlichungstag der Anmeldung: **02.06.1999**
(21) Anmeldenummer: 98121401.8
(22) Anmeldetag: 11.11.1998
(51) Int. Cl.: H04B 7/26, H04B 7/00

(54) **Übertragungssystem zur Übertragung von Digitalsignalen in einem Funk-Teilnehmeranschlussnetz**

(30) Priorität: 25.11.1997 DE 19752197
(71) Anmelder: SIEMENS AKTIENGESELLSCHAFT, 80333 München (DE)
(72) Erfinder: Zirwas, Wolfgang, 82194 Gröbenzell (DE)

(57) **Zusammenfassung**

In einem Funk-Teilnehmeranschlussnetz ist für die Digitalsignalübertragung von der Basisstation zu den Funkteilnehmern hin die Gesamt-Sendeleistung der Basisstation auf eine Mehrzahl von Funkkanälen mit unterschiedlicher Bitanzahl je Symbol aufgeteilt; die für in grösserer oder kleinerer Entfernung von der Basisstation befindliche Funkteilnehmer bestimmten Digitalsignale werden mit entsprechend höherer oder niedrigerer Bitanzahl je Symbol übertragen, wobei die mehrfach übertragenen Bits empfangsseitig jeweils wieder zu einem einzigen Bit zusammengefasst werden.

## Beschreibung

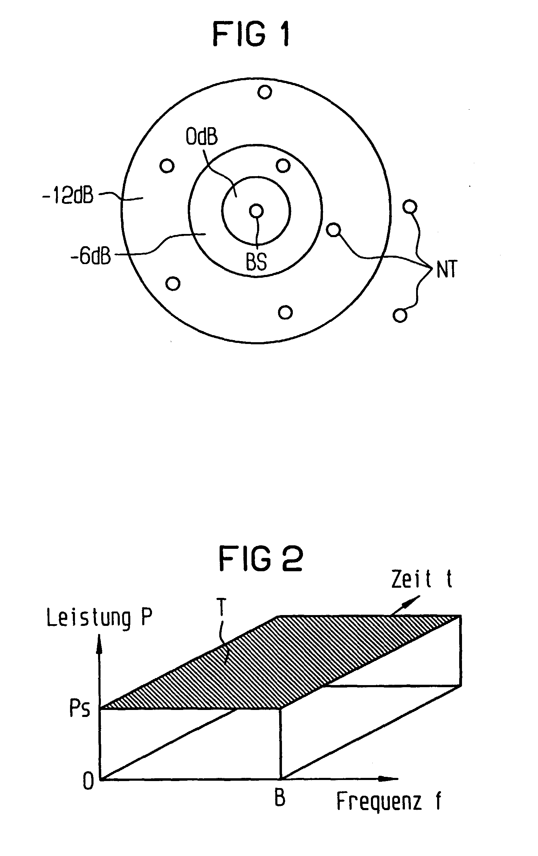

Ein Funk-Teilnehmeranschlussnetz ist ein - typischerweise flächendeckendes - System von Funkzellen, die jeweils eine - in der Regel möglichst zentral gelegene - ortsfeste Basisstation enthalten, um die herum in einem Radius von z.B. 1 km sich, mehr oder weniger homogen verteilt, die Network Terminations (NTs) der Funkteilnehmer befinden. Eine solche Funkzelle ist in der Zeichnung FIG 1 skizziert, in der die Basisstation mit BS und die Funkteilnehmer (bzw. ihre Network Terminations) mit NT bezeichnet sind. Da in einem Funksystem die Funkfelddämpfung quadratisch mit der Entfernung zunimmt, ist die Funkfeldstärke am Zellenrand wesentlich kleiner als im Zelleninneren; in FIG 1 ist diese Dämpfung mit konzentrischen Kreisen um die Basisstation herum verdeutlicht.
Beispielsweise durch Regen bedingte, ebenfalls entfernungsabhängige Zusatzdämpfungen können die bei den Network Terminations am Zellenrand zur Verfügung stehende Empfangsleistung zusätzlich sehr stark verringern.

In einem solchen Funksystem, das im Prinzip ein Punkt-zu-Multipunkt-System darstellt (der Sender der Basisstation kann die Empfänger vieler Teilnehmer erreichen), kann die Signalübertragung von der Basisstation abwärts zu den Funkteilnehmern hin im Zeitmultiplex (TDM - Time Division Multiplex) in einem 155-Mbit/s-Bitstrom vor sich gehen und die Signalübertragung von den Funkteilnehmern aufwärts zur Basistation hin in einem TDMA(Time Division Multiple Access)-Zugriffsverfahren.

In einem solchen System wird die Shannon'sche Kanalkapazität in zweifacher Hinsicht nicht optimal ausgenutzt:
Alle Network Terminations (NT in FIG 1) verarbeiten die volle Summenbitrate von 155 Mbit/s des Abwärts-Zeitmultiplexsignals, obwohl in der Regel nur ein kleiner Teil dieser Bitrate für die jeweilige Network Termination bestimmt ist. Die hohe Bandbreite des Zeitmultiplexsignals führt dabei zu einem entsprechend schlechten Signal/Stör-Leistungsverhältnis am teilnehmerindividuellen Empfänger.
Die Sendeleistung insbesondere der Basisstation (BS in FIG 1) ist aus telekommunikationsrechtlichen und/oder technischen Gründen begrenzt, woraus sich bei gegebenen Parametern wie RF-Sendefrequenz, Summenbitrate, Antennengewinn, Signal/Stör-Verhältnis der grösstmögliche Zellenradius ergibt; bei denjenigen Network Terminations (NT in FIG 1), die näher an der Basisstation liegen, ist die Empfangsleistung - und damit auch das Signal/Stör-Leistungsverhältnis - dabei grösser, als dies für eine vorgegebene Bitfehlerrate nötig ist, so dass insoweit Sendeleistung 'verschenkt' wird.

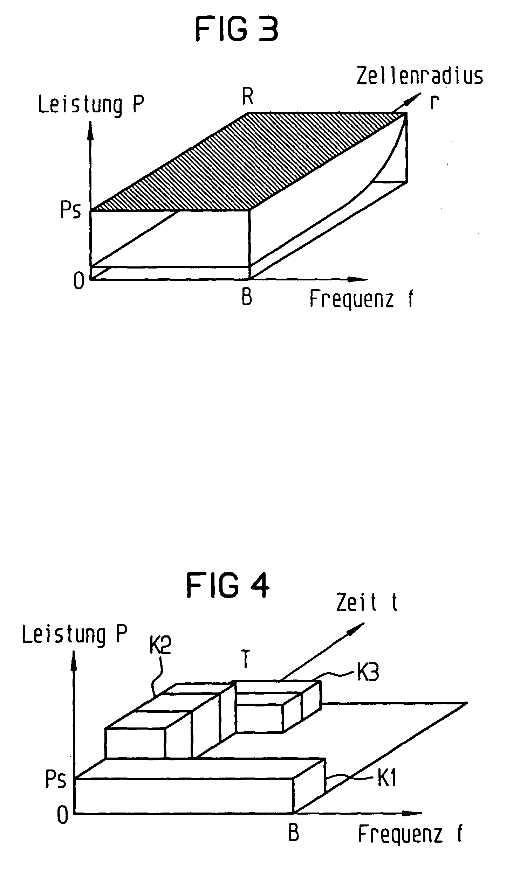

Die - bei TDM übliche - gleichmäßige Verteilung der zur Verfügung stehenden Gesamtleistung über der Zeit t und der Frequenz f verdeutlicht das in Bild 2 dargestellte sog. 'water-filling'-Diagramm für einen Kanal mit einer Bandbreite B, einer Zeitdauer T und einer Sendeleistung Pₛ. Eine solche gleichmässige Leistungsverteilung, wie sie in der in FIG 2 schraffierten ebenen Oberfläche des Diagramms zum Ausdruck kommt, ist ideal in einem Funksystem, in dem alle Network Terminations den gleichen konstanten Abstand von der Basisstation haben.
Nimmt man die Zeitdauer T als konstant an, so dass sie im Diagramm nicht dargestellt werden muss, und führt man den Abstand r von der Basisstation als dritte Variable ein, so erhält man für die für eine konstante Bitfehlerrate benötigte Sendeleistung P die in FIG 3 schattiert angelegte gekrümmte Oberfläche, die sich ergibt, indem man für jeden Punkt der Ebene die benötigte Leistung P für eine vorgegebene Bitfehlerrate (z.B. 10⁻⁹) aufträgt. Bei vernachlässigbaren Multipatheffekten ist P von der Frequenz kaum abhängig. Die in FIG 2 dargestellte Leistungsverteilung nach dem 'water-filling'-Algorithmus, d.h. bei vom Abstand r unabhängiger Leistung Pₛ, ist in FIG 3 wiederum schraffiert eingezeichnet. Der Abstand zwischen der gekrümmten und der geraden Oberfläche ist dann ein Maß für die oben so apostrophierte, bei einem gegebenen Abstand r 'verschenkte' Leistung.

Zur Optimierung der Leistungsverteilung in Aufwärtsrichtung (von den Funkteilnehmern (NT) zur Basistation BS hin) kann man innerhalb einer Funkzelle jeweils die Empfangsleistung an den einzelnen Network Terminations NT messen und als Maß für die jeweilige Funkfelddämpfung nutzen, nach Maßgabe dessen dann die Sendeleistung der betreffenden Network Termination entsprechend nachgeregelt wird.
Zur Optimierung der Leistungsverteilung in Abwärtsrichtung (von der Basistation BS zu den Funkteilnehmern (NT) hin) können mit adaptiven Antennen die einzelnen Network Terminations NT einer Funkzelle nacheinander angesteuert werden, wobei der höhere Gewinn solcher Antennen gegenüber omnidirektionalen Antennen bei gleicher Sendeleistung die Überbrückung entsprechend größerer Entfernungen erlaubt. Adaptive Antennen stehen allerdings erst am Anfang der Entwicklung.
Man kann auch für weiter entfernte Network Terminations einerseits und Network Terminations im Nahbereich der Basisstation andererseits unterschiedliche Modulationsverfahren verwenden, beispielsweise 16QAM für den inneren und QPSK für den äusseren Bereich der Funkzelle. Das erforderliche Signal/Stör-Verhältnis (S/N) ist bei QPSK um 7 dB kleiner als bei 16QAM. Bei 16QAM erhöhen sich allerdings, speziell bei den Verstärkern, die Anforderungen an die Linearität. Ein solches Verfahren ist vor allem für OFDM geeignet.

Die Erfindung zeigt nun einen anderen Weg zu einer Optimierung der Leistungsverteilung innerhalb einer Funkzelle.

Die Erfindung betrifft ein System zur Übertragung von Digitalsignalen in einem Funk-Teilnehmeranschlussnetz, insbesondere in einem breitbandigen RLL(Radio in the Local Loop)-Teilnehmeranschlussnetz; dieses Übertragungssystem ist erfindungsgemäß dadurch gekennzeichnet, dass die Digitalsignalübertragung von der Basisstation einer Funkzelle zu den in der Funkzelle befindlichen Funkteilnehmern hin im Summenbittakt des Systems in Zeitmultiplex-Funkkanälen unterschiedlicher Bitanzahl je Nutzsignalelement (Symbol) in der Weise vor sich geht, dass jeder Verbindung von der Basisstation zu einem Funkteilnehmer hin nach Maßgabe von dessen Entfernung von der Basisstation ein Funkkanal der benötigten Bitanzahl je Nutzsignalelement zugeordnet wird, so dass die für in grösserer oder kleinerer Entfernung von der Basisstation befindliche Funkteilnehmer bestimmten Digitalsignale in Funkkanälen mit entsprechend höherer oder niedrigerer Bitanzahl je Nutzsignalelement übertragen werden, wobei die mehrfach übertragenen Bits empfangsseitig jeweils wieder zu einem einzigen Bit zusammengefasst werden.

Mit einer solchen - vorteilhafterweise auch in einem bereits bestehenden TDM/TDMA-System einfach zu implementierenden - Leistungsskalierung, derzufolge in Abhängigkeit von der Entfernung zwischen Basisstation und Funkteilnehmer ggf. eine Mehrfachübertragung von Bits stattfindet und dazu den jeweils gerade bestehenden Verbindungen zwischen Basisstation und Funkteilnehmern jeweils ein Funkkanal gerade der benötigten Bitanzahl je Symbol zugewiesen wird, ermöglicht die Erfindung vorteilhafterweise eine optimale Leistungsausnutzung innerhalb der Funkzelle, wobei entweder die Gesamt-Sendeleistung der Basisstation entsprechend reduziert werden kann oder aber - bei gleichbleibender Gesamt-Sendeleistung - die gewonnene Leistung zur Erhöhung des Zellenradius genutzt werden kann.

Die Bitanzahl je Nutzsignalelement (Symbol), d.h. der Wiederholungsfaktor, mit dem ein Bit unmittelbar aufeinanderfolgend mehrfach übertragen wird, kann eine beliebige ganze Zahl n sein, so dass eine entsprechend feine, ggf. auch adaptive Anpassung an die jeweilige Funkkanaldämpfung möglich ist. Die Erhöhung der Bitanzahl je Nutzsignalelement bzw., anders gesagt, die mehrfache, unmittelbar aufeinanderfolgende Übertragung eines Bits im Rahmen der Summenbitrate des Systems unter Zusammenfassung zu einem entsprechend "langen" Bit (bzw. einem einzigen Symbol) hat folgende Wirkung:

Jede Verdopplung der Bitdauer durch 2-fache (und weiter 4-fache, 8-fache ...) Übertragung des gleichen Bits verdoppelt den auf das Bit (bzw. das ihm entsprechende Symbol) entfallenden Anteil an der Gesamt-Sendeleistung, d.h. die anteilige Signalleistung S wird jeweils um 3 dB größer. Im Zeitbereich wirkt sich das direkt als 2-fache (und weiter 4-fache, 8-fache ...) Energie je Einzelsymbol aus.

Jede solche Verdopplung der Bitanzahl je Symbol halbiert zugleich die Bandbreite des Signals; die Übertragung der gesamten Sendeleistung Pₛ innerhalb der jeweils halben Bandbreite erhöht die Leistung/Hz um jeweils 3 dB.

Durch die Halbierung der Bandbreite reduziert sich bei entsprechender Tiefpassfilterung zugleich die Rauschleistung R pro Symbol um jeweils 3 dB.

Insgesamt verbessert sich damit das Signal/Stör-Verhältnis S/N für n = 2, 3, 4, 5, 6, ... Bits/Symbol um 9 bzw. 14 bzw. 18 bzw. 21 bzw. 23 ... dB, d.h. bei jeder Verdopplung der Bitdauer erhöht sich das Signal/Stör-Verhältnis S/N um 9 dB.

Durch die - aus der Mehrfachübertragung von Bits resultierenden - Konzentration der gesamten Sendeleistung jeweils auf ein entsprechend verkleinertes Frequenzband wird die Kanalkapazität für weiter von der Basisstation entfernte Funkteilnehmer (Network Terminations) optimal ausgenutzt und - in Systemen begrenzter Leistung - keine Leistung bzw. Kanalkapazität "verschenkt". Da durch die verlängerte Bit- bzw. Symboldauer der Einfluss von Multipath-Effekten stark verringert wird, können in zweckmässiger Weiterbildung der Erfindung auf Funkstrecken mit unzureichendem Signal/Stör-Verhältnis die Digitalsignale auch zu näher zur Basisstation liegenden Funkteilnehmern mit entsprechend höherer Bitanzahl je Nutzsignalelement (Symbol) übertragen werden.

Weitere Besonderheiten der Erfindung werden aus der nachfolgenden näheren Erläuterung an Hand der Zeichnungen ersichtlich. Dabei zeigen
- FIG 1: das typische Bild einer Funkzelle mit darin auftretenden Dämpfungen und
- FIG 2: die gleichmäßige Verteilung der zur Verfügung stehenden Gesamt-Sendeleistung über der Zeit und der Frequenz;
- FIG 3: verdeutlicht den Verlauf der für eine konstante Bitfehlerrate benötigten Sendeleistung in Abhängigkeit vom Abstand des Funkteilnehmers von der sendenden Basisstation, und
- FIG 4: zeigt eine Aufteilung der Gesamt-Sendeleistung über der Frequenz-/Zeit-Ebene auf Funkkanäle unterschiedlicher Bitanzahl je Symbol.

Die Zeichnungen FIG 1, FIG 2 und FIG 3 wurden oben bereits erläutert, so dass sich weitere Erläuterungen an dieser Stelle erübrigen.

FIG 4 verdeutlicht in einem Ausführungsbeispiel die Aufteilung der Gesamt-Sendeleistung der Basisstation (BS in FIG 1) einer Funkzelle (FIG 1) auf die Frequenzbänder von Zeitmultiplex-Funkkanälen unterschiedlicher Bitanzahl je Nutzsignalelement (Symbol), wobei sich die Darstellung in FIG 4 auf nur drei derartige Zeitmultiplex-Funkkanäle K1, K2, K3 erstreckt. Zur - im Summenbittakt des Systems vor sich gehenden - Digitalsignalübertragung von der Basisstation zu den in der Funkzelle befindlichen Funkteilnehmern (NT in FIG 1) hin wird jeder Verbindung von der Basisstation zu einem Funkteilnehmer nach Maßgabe von dessen Entfernung von der Basisstation - oder, allgemein gesagt, des nach Maßgabe jeweiligen Signal/Stör -Verhältnisses - ein oder auch mehrere Funkkanäle der jeweils erforderlichen Bitanzahl je Symbol zugeordnet werden: Verbindungen zu in grösserer Entfernung von der Basisstation befindlichen Funkteilnehmern werden entsprechend schmalerbandige Funkkanäle grösserer Bitanzahl je Symbol zugeordnet, in denen die Digitalsignale mit höherer Leistung/Hz übertragen werden, und Verbindungen zu in kleinerer Entfernung von der Basisstation befindlichen Funkteilnehmern werden entsprechend breiterbandige Funkkanäle kleinerer Bitanzahl je Symbol zugeordnet, in denen die Digitalsignale mit kleinerer Leistung/Hz

übertragen werden. So mag im Ausführungsbeispiel gemäß FIG 4 der Kanal K1 einer Verbindung mit guten Übertragungsverhältnissen zu einem nicht weit von der Basisstation entfernten Funkteilnehmer zugeordnet sein, zu dem hin die Digitalsignale mit einer relativ kleinen Bitanzahl je Symbol übertragen werden können; der Funkkanal K1 ist demzufolge vergleichsweise breitbandig, und die Digitalsignale werden mit relativ kleiner Leistung/Hz übertragen. Demgegenüber mag der Kanal K3 einer Verbindung mit guten Übertragungsverhältnissen zu einem merklich weiter von der Basisstation entfernten Funkteilnehmer zugeordnet sein, zu dem hin die Digitalsignale mit einer grösseren (im Beispiel zweifachen) Bitanzahl je Symbol übertragen werden müssen; der Funkkanal K3 ist demzufolge weniger breitbandig, und die Digitalsignale werden mit entsprechend höherer Leistung/Hz übertragen.

Durch die vermehrfachte Bitdauer wird auch der Einfluß von Multipath-Effekten stark verringert. Eine Mehrfachübertragung von Bits kann daher auch für Verbindungen zu an sich näher zur Basisstation gelegenen Funkteilnehmern mit schlechtem Funkkanal vorgesehen sein. Dementsprechend mag im Ausführungsbeispiel nach FIG 4 der Kanal K2 einer Verbindung mit schlechten Übertragungsverhältnissen zu einem mehr oder weniger weit von der Basisstation entfernten Funkteilnehmer zugeordnet sein, zu dem hin die Digitalsignale wegen ebendieser schlechten Übertragungsverhältnisse mit einer noch grösseren (im Beispiel der dreifachen) Bitanzahl je Symbol übertragen werden müssen; der Funkkanal K2 ist demzufolge noch schmaler, und die Digitalsignale werden mit noch höherer Leistung/Hz übertragen.

Die sendeseitig z.B. durch entsprechende Mehrfachabtastung eines Nutzsignalelements (Symbols) gewonnenen, im Summenbittakt des Systems mehrfach übertragenen Bits werden empfangsseitig wieder zu einem entsprechend langen Bit zusammengefasst, das dann das zugrundeliegende Nutzsignalelement (Symbol) darstellt. Ohne daß dies hier noch weiter ins Einzelne gehend erläutert werden muß, können dazu in den Network Terminations der Funkteilnehmer empfangsseitig jeweils ein adaptives Filter (zur Minimierung der Rauschbandbreite) und eine Signalabtastschaltung vorgesehen sein, bei der der optimale Abtastzeitpunkt für die Abtastung adaptiv zu bestimmen ist. Alternativ kann aber auch ein Integrator mit variabler Länge vorgesehen sein, in dem jeweils die Signalenergie der gesamten (vermehrfachten) Bitdauer aufakkumuliert und gleichzeitig die Rauschleistung optimal unterdrückt wird.

## Patentansprüche

1. System zur Übertragung von Digitalsignalen in einem Funk-Teilnehmeranschlussnetz, insbesondere in einem breitbandigen RLL(Radio in the Local Loop)-Teilnehmeranschlussnetz,
**dadurch gekennzeichnet,**
dass die Digitalsignalübertragung von der Basisstation einer Funkzelle zu den in der Funkzelle befindlichen Funkteilnehmern hin im Summenbittakt des Systems in Zeitmultiplex-Funkkanälen unterschiedlicher Bitanzahl je Nutzsignalelement in der Weise vor sich geht, dass jeder Verbindung von der Basisstation zu einem Funkteilnehmer hin nach Maßgabe von dessen Entfernung von der Basisstation ein Funkkanal der benötigten Bitanzahl je Nutzsignalelement zugeordnet wird, so dass die für in grösserer oder kleinerer Entfernung von der Basisstation befindliche Funkteilnehmer bestimmten Digitalsignale in Funkkanälen mit entsprechend höherer oder niedrigerer Bitanzahl je Nutzsignalelement übertragen werden, wobei die mehrfach übertragenen Bits empfangsseitig jeweils wieder zu einem einzigen Bit zusammengefasst werden.

2. Übertragungssystem nach Anspruch 1,
**dadurch gekennzeichnet,**
auf Funkstrecken mit unzureichendem Signal/Stör-Verhältnis die Digitalsignale auch zu näher zur Basisstation liegenden Funkteilnehmern mit entsprechend höherer Bitanzahl je Nutzsignalelement übertragen werden.
